Europäisches Patentamt

**European Patent Office**

Office européen des brevets

(11) Publication number:

**0 085 014**
**A1**

(12) **EUROPEAN PATENT APPLICATION**

(21) Application number: **83400188.5**

(22) Date of filing: **27.01.83**

(51) Int. Cl.³: **C 08 J 3/12, C 08 G 75/23**

(30) Priority: **01.02.82 US 344419**

(43) Date of publication of application: **03.08.83**
Bulletin **83/31**

(84) Designated Contracting States: **DE FR GB IT**

(71) Applicant: **THE BENDIX CORPORATION, Executive Offices Bendix Center, Southfield Michigan 48037 (US)**

(72) Inventor: **Kiwak, Robert S., 4029 Wildwood Way, Ellicott City Maryland 21043 (US)**

(74) Representative: **Huchet, André et al, Service Brevets Bendix 44, rue François 1er, F-75008 Paris (FR)**

(54) Method for forming fine powders from resilient polymers by reactive grinding.

㊲ A method for forming fine powders from resilient thermoplastic polymers by producing small particles (5) having a size ranging from 1 to 10 microns.

This method includes, according to the invention, ball milling coarse particles (1) or pellets of the thermoplastic polymer in a water solution containing a stress crack promoter (acetone, for instance) and a surfactant, and then floating said small particles in said water solution to separate them from the coarse particles.

## METHOD FOR FORMING FINE POWDERS
## FROM RESILIENT POLYMERS BY REACTIVE GRINDING

The present invention is related to a method for forming fine powders from resilient polymers by reactive grinding, and in particular to a method using a surfactant and a stress crack promoting solvent that is soluble in water and easily volatilized.

Thermoplastic polymers, such as polyethersulfone (PES), polycarbonates and polysulfone are normally available as only pellets or coarse powders. However, many uses of these materials would be significantly enhanced if they were available in smaller particle sizes in the range from one to ten microns. These thermoplastics are very resilient and resist pulverizing by conventional techniques, such as ball milling, vibratory grinding or attritor milling.

Some of these polymers, such as polyethersulfone, are not embrittled by low temperature and therefore are not amenable to cryogenic grinding.

U.S. Patent No. 2 582 327 discloses an alternate process for making fine polyethylene powders. In this process, the polyethylene is heated to its softening temperature and mechanically worked into and distributed throughout a nonsolvent cooling liquid. The cooling liquid reduces the temperature of the polyethylene to a value below that at which it is resilient. The polyethylene is then shredded by mechanical mixing to produce small feather or fiber like particles. Conversely, U.S. Patent No. 3 377 323 discloses a method for pulverizing polymers by heating in a water solution to their melting temperature. The hot mixture is then dispersed into fine particles by spraying through an appropriate nozzle.

Furthermore, U.S. Patent No. 2 933 766 discloses the use of a mixture of acetone and water to make a mud or paste from a coarse powder of ceramic materials. The mud is subsequently ground to produce the desired granular size. Acetone is used in this process because of its low vapor pressure which permits it to be dissipated quickly during the granulating process. The use of surface active agents or surfactants, such as methanol, ethanol, isopropanol, ethylamine, methylamine, acetone, and mixtures thereof, for weakening the interlayer forces permitting coal to be more readily fragmented is further disclosed in U.S. Patent No. 3 815 826. The use of surfactants is still amplified in an article entitled "Surfactants" published in Chem. Tech., June 1980 (pages 356-359) for reducing the strength of geologic materials. Although this article suggests the use of surfactants in other areas, including plastics, metal embrittlement and surface crazing, it does not substantiate this implication nor infer that the use of surfactants may be used in the formation of powdered plastics.

It is an object of the present invention to propose a novel and efficient method for forming fine powders from resilient thermoplastic polymers by producing small particles having a size ranging from ca. 1 to 10 microns.

To achieve this object, the method according to this invention comprises the steps of :

(a) diffusing a stress crack promoter into the surface of coarse particles of a thermoplastic polymer to weaken the surface structure of said coarse particles along the diffusion paths of said stress crack promoters ;

(b) applying an external force to generate cracks in the surface of said coarse particles along said diffusion paths ;

(c) diffusing a surfactant into said cracks to reduce the stress crack resistance of said coarse thermoplastic polymer particles and causing said cracks to enlarge ;

(d) applying an external force to said coarse thermoplastic polymer particles to dislodge the small particles formed between the enlarged cracks ; and

(e) floating said small particles in water to separate them from the coarse particles.

In a preferred embodiment of the invention, the steps of diffusing a stress crack promoter and diffusing a surfactant comprise mixing the coarse thermoplastic polymer particles into a water solution containing a water soluble stress crack promoter having a concentration between 5 and 30 percent by volume and a surfactant having a concentration between 1 and 5 percent by volume to form a slurry.

These and other characteristic features of the method according to the invention will become readily apparent from reading the following description of a preferred embodiment, given by way of example only, and with reference to the accompanying drawings, in which :

- Figure 1 is a block diagram listing the discrete steps of the disclosed process ;

- Figure 2 is a flow diagram listing the sequential steps of the disclosed process causing the disintegration of the larger particles into powder form ;

- Figure 3 is a sketch of a single particle pictorially illustrating the steps of Figure 2.

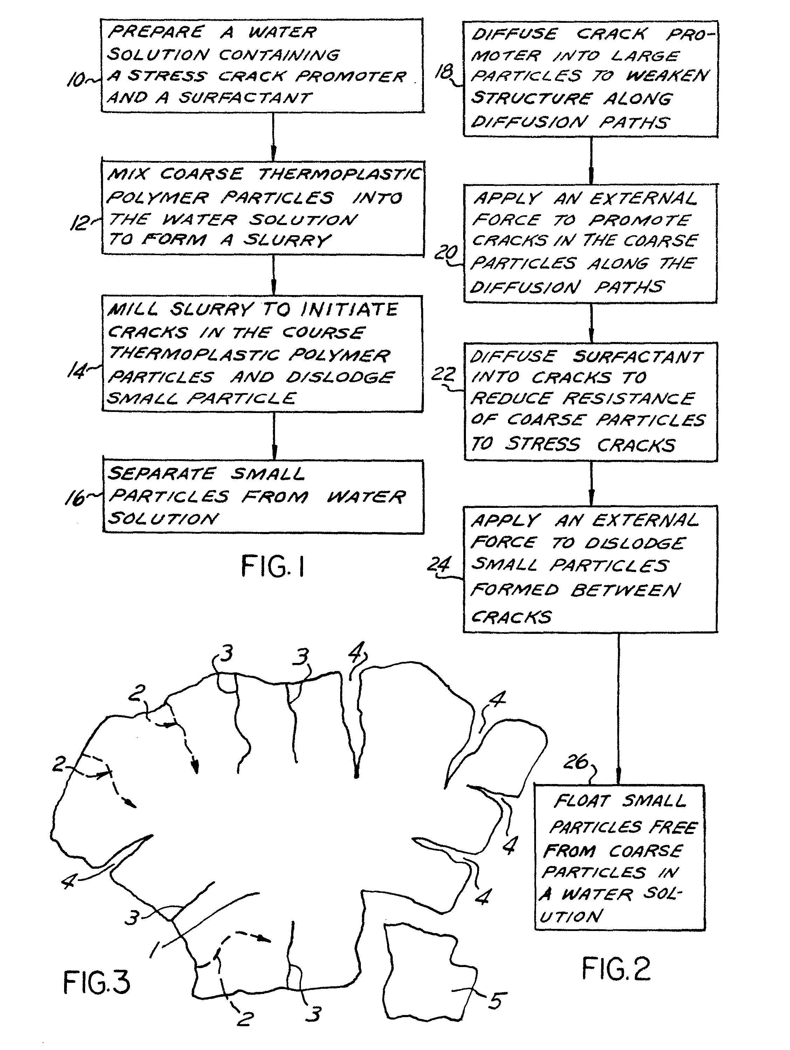

The invention is a process for producing fine powders of less than 10 microns in diameter from pellets or coarse powder of a thermoplastic polymer. The individual steps of the process are presented in the diagram illustrated on Figure 1. Referring to Figure 1, a water solution containing a water soluble stress crack promoter and a surfactant is prepared as described in block 10. The quantity of the stress crack promoter in the solution is between 10 and 30 percent by volume and the quantity of the surfactant, such as a glycerol ester or a polyethylene glycol ester, is between 1 and 5 percent.

A coarse thermoplastic polymer powder is then mixed into the water solution to form a slurry as described in block 12. The coarse thermoplastic powder may be either small preformed pellets of the thermoplastic polymer or a coarse powder produced by mechanical abrasion techniques.

The slurry is then ball milled for a predetermined period of time, typically between 12 and 36 hours, as indicated in block 14, to break up the individual particles of the thermoplastic polymer powder into much smaller particles of the desired size range. The time required to reduce the coarse particles to smaller particles is dependent upon the original size of the coarse particles and the concentration of the stress crack promoter in the water solution. The final step in the process is the removal of the excess water solution as indicated in block 16. This step may be performed by allowing the small particles to settle to the bottom of a container then decantering off the excess water solution. Alternatively, the excess water solution may be removed by pouring the slurry through an appropriate filter. If desired, the small particles of the thermoplastic polymer may be reduced to powder form by heating to drive off the residual water solution. However for most applications it is preferred that the small particles be stored in the wet state.

This process has been found to be highly effective in producing extremely small particles of polyethersulfone (PES) under 10 microns in diameter. For this particular application, a water solution containing acetone as the stress crack promoter ranging in concentration from 10 to 30 percent by volume was used. For other thermoplastic polymers such as polycarbonates or polysulfones other stress crack promoters such as methy-ethyl-keytone, methyl-pryolidone or dimethyl-sulfoxide may be used. Most of the thermoplastic polymers due to their chemical structure may only be sensitive to particular stress crack promoters and totally insensitive to others. Therefore, for each thermoplastic polymer a different stress crack promoter may be required to optimize the disclosed process.

A breakdown of the chemical and physical steps of the process is presented in the flow diagram of Figure 2 and pictorially illustrated in Figure 3. Referring to Figures 2 and 3, the stress crack promoter is diffused into the surface of a thermoplastic polymer particle 1 to weaken the structure along a diffusion path, as described in block 18 and pictorially illustrated in Figure 3 by broken arrows 2. An external force applied to the coarse particle 1, such as by ball milling produces minute cracks in the particle surface along the diffusion paths 2 of the crack promoter as described in block 20 and pictorially illustrated by cracks 3. The surfactant then enters the minute cracks 3 decreasing the resistance of the thermoplastic polymer to stress crack propagation which causes the cracks to open even wider as stated in block 22 and pictorially illustrated by larger cracks 4. This opening of the cracks is in accordance with the Rehbinder model discussed in the article "Surfactants" Chem. Tech., June 1980, pages 356 to 359. The external forces produced by continued ball milling dislodge the small particle 5 formed between adjacent cracks as described in block 24. The small particles then float free in the water solution as described in block 26 and shown in Figure 3. The small particles may then be recovered by removing the excess water solution as discussed with reference to block 16 of Figure 1.

### CLAIMS

1. A method for forming fine powders from resilient thermoplastic polymers, characterized by the steps of :

(a) diffusing a stress crack promoter into the surface of coarse particles (1) of a thermoplastic polymer to weaken the surface structure of said coarse particles (1) along the diffusion paths (2) of said stress crack promoters ;

(b) applying an external force to generate cracks (3) in the surface of said coarse particles (1) along said diffusion paths ;

(c) diffusing a surfactant into said cracks (3) to reduce the stress crack resistance of said coarse thermoplastic polymer particles and causing said cracks to enlarge (4) ;

(d) applying an external force to said coarse thermoplastic polymer particles (1) to dislodge the small particles (5) formed between the enlarged cracks (4) ; and

(e) floating said small particles (5) in water to separate them from the coarse particles (1).

2. A method according to claim 1, characterized in that the steps of diffusing a stress crack promoter and diffusing a surfactant comprise mixing said coarse thermoplastic polymer particles (1) into a water solution containing a water soluble stress crack promoter having a concentration between 5 and 30 percent by volume and a surfactant having a concentration between 1 and 5 percent by volume to form a slurry.

3. A method according to claim 1 or 2, characterized in that said stress crack promoter is selected from the group comprising acetone, methyl-ethyl-keytone, methyl-pyrolidone and dimethylsulfoxide.

4. A method according to claim 1 or 2, wherein said coarse thermoplastic polymer is polyethersulfone, characterized in that said stress crack promoter is acetone.

5. A method according to any of claims 2 to 4, characterized in that the step of applying an external force to generate cracks (3) includes the step of ball milling said slurry.

6. A method according to any of claims 2 to 5, characterized in that the step of applying an external force to dislodge the small particles (5) comprises the step of ball milling said slurry.

7. A method according to any of claims 2 to 6, characterized in that the step of floating said small particles (5) in water comprises floating said small particles in said water solution.

8. A method according to claim 7, characterized in that it further includes the step of removing the excess water solution.

9. A method according to claim 8, characterized in that it further includes the step of heating said slurry to drive off all of said water solution.

0085014

1 / 1

```
┌─────────────────────────────┐        ┌─────────────────────────────┐
│ PREPARE A WATER             │        │ DIFFUSE CRACK PRO-          │
│ SOLUTION CONTAINING         │        │ MOTER INTO LARGE            │
│ A STRESS CRACK PROMOTER     │   18   │ PARTICLES TO WEAKEN         │
│ AND A SURFACTANT            │        │ STRUCTURE ALONG             │
└─────────────────────────────┘        │ DIFFUSION PATHS             │
         10                            └─────────────────────────────┘
```

FIG. 1

FIG. 2

FIG. 3

0085014

| | DOCUMENTS CONSIDERED TO BE RELEVANT | | EP 83400188.5 |

| Category | Citation of document with indication. where appropriate, of relevant passages | Relevant to claim | CLASSIFICATION OF THE APPLICATION (Int. Cl. ³) |
|---|---|---|---|
| A | GB – A – 873 196 (ARMSTRONG CORK COMPANY) <br> * Claims * <br> –– | 1,3 | C 08 J 3/12 <br> C 08 G 75/23 |
| D,A | US – A – 2 582 327 (WALTER A. HAINE) <br> * Claims * <br> –––– | 1 | |

| | | | TECHNICAL FIELDS SEARCHED (Int. Cl. ³) |
| | | | C 08 J |

The present search report has been drawn up for all claims

| Place of search <br> VIENNA | Date of completion of the search <br> 28–04–1983 | Examiner <br> WEIGERSTORFER |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document. but published on, or after the filing date
D : document cited in the application
L : document cited for other reasons
& : member of the same patent family. corresponding document

EPO Form 1503 03.82